# EUROPEAN PATENT SPECIFICATION

(11) **EP 4 552 952 B1**
(45) Date of publication and mention of the grant of the patent: **10.06.2026**
(21) Application number: 24208457.2
(22) Date of filing: 23.10.2024
(51) Int. Cl.: B62D 21/15, B62D 25/08

(54) **VEHICLE FRONT PART STRUCTURE**
FAHRZEUGVORDERTEILSTRUKTUR
STRUCTURE DE PARTIE AVANT DE VÉHICULE

(30) Priority: 08.11.2023 JP 2023191138
(43) Date of publication of application: 14.05.2025
(73) Proprietor: TOYOTA JIDOSHA KABUSHIKI KAISHA, Aichi-ken, 471-8571 (JP)
(72) Inventor: TANAKA, Yuya, TOYOTA-SHI, AICHI-KEN, 471-8571 (JP)
(74) Representative: Cabinet Beau de Loménie

(56) References cited:
- JP-A- 2014 162 347
- US-B2- 10 773 752

## Description

### BACKGROUND OF THE INVENTION

### 1. Field of the Invention

The present invention relates to a vehicle front part structure.

### 2. Description of Related Art

In a vehicle front part structure disclosed in Japanese Unexamined Patent Application Publication No. 2016-107872 (JP 2016-107872 A), a front side member has a closed section formed by an inner front side member and an outer front side member. The outer front side member includes a weakened portion to be bent inward in a vehicle width direction when a collision load is input from the front part of the vehicle. A reinforcing member having a hat shape that is open to the outer front side member in a plan view is disposed at a location where the reinforcing member faces the weakened portion within the closed section of the front side member. Front and rear flange portions of this reinforcing member are joined to the inner side surface of the outer front side member in the vehicle width direction. In the event of a frontal collision of the vehicle, the front side member is bent inward in the vehicle width direction at a point starting from the weakened portion, and the reinforcing member is deformed within the closed section of the front side member. This deformation of the reinforcing member increases the energy absorption amount of the front side member. Similar vehicle front part structures have been disclosed in Japanese Paten No. JP2014162347A and US Patent No. 10,773,752 (US 10,773,752 B).

### SUMMARY OF THE INVENTION

In JP 2016-107872 A, there is no means for restricting deformation of the inner front side member. Therefore, in the event of the frontal collision of the vehicle, relative displacement occurs between the inner front side member and the outer front side member in a vehicle front-rear direction. As a result, the way in which the front side member that is a framework member is bent (hereinafter referred to as "bending mode") may be unstable. Therefore, there is room for improvement.

The present invention provides a vehicle front part structure that can stabilize the bending mode of a framework member in the event of a frontal collision.

A vehicle front part structure according to an aspect includes: a framework member having a closed section and extending in a vehicle front-rear direction at a front part of a vehicle; a reinforcing member extending in the vehicle front-rear direction within the closed section of the framework member, the reinforcing member including two ends in the vehicle front-rear direction that are attached to a wall portion of the framework member on a first side in an orthogonal direction orthogonal to the vehicle front-rear direction, the reinforcing member being bent to project to a second side in the orthogonal direction at a bending portion provided between the two ends; and a limiting portion configured to limit relative movement of the reinforcing member in the vehicle front-rear direction with respect to a wall portion of the framework member on the second side.

In the above aspect, the reinforcing member extending in the vehicle front-rear direction is provided within the closed section of the framework member extending in the vehicle front-rear direction at the front part of the vehicle. The both ends of the reinforcing member in the vehicle front-rear direction are attached to the wall portion of the framework member on the first side in the orthogonal direction orthogonal to the vehicle front-rear direction. The reinforcing member is bent to project to the second side in the orthogonal direction at the bending portion provided between the both ends. Therefore, in the event of a frontal collision of the vehicle, the reinforcing member and the framework member are bent to the second side at a point starting from the bending portion. At this time, the relative movement of the reinforcing member in the vehicle front-rear direction with respect to the wall portion of the framework member on the second side is limited by the limiting portion. Thus, the bending mode of the framework member is stabilized.

In the vehicle front part structure of the above aspect, the limiting portion includes a recess that is provided at a location on the wall portion on the second side where the recess faces the bending portion, and that recedes to the second side.

In the above aspect, the framework member includes the recess that recedes to the second side at the location on the wall portion on the second side where the recess faces the bending portion of the reinforcing member. Therefore, when the reinforcing member is bent to the second side at a point starting from the bending portion, a peripheral portion of the bending portion of the reinforcing member engages with the recess, thereby limiting the relative movement of the reinforcing member in the vehicle front-rear direction with respect to the wall portion on the second side.

In the vehicle front part structure of the above aspect, the reinforcing member may include a projection that is provided at a location where the projection faces the recess in the orthogonal direction, and that projects to the second side.

In the above aspect, the reinforcing member may include the projection that projects to the second side at the location where the projection faces, in the orthogonal direction orthogonal to the vehicle front-rear direction, the recess provided on the wall portion of the framework member on the second side. Therefore, when the reinforcing member is bent, the projection and the recess engage with each other, thereby effectively limiting the relative movement of the reinforcing member in the vehicle front-rear direction with respect to the wall portion on the second side.

In the vehicle front part structure of the above aspect, a dimension of the recess in the vehicle front-rear direction may be set larger than a dimension of the projection in the vehicle front-rear direction.

With the configuration of the above aspect, for example, when the projection of the reinforcing member is inserted into the recess of the framework member under normal conditions, dimensional variations of the members in the vehicle front-rear direction can be absorbed easily.

In the vehicle front part structure of the above aspect, the limiting portion may include a connecting portion that connects the wall portion on the second side and the bending portion.

In the above aspect, the wall portion of the framework member on the second side and the bending portion of the reinforcing member may be connected at the connecting portion. Therefore, when the reinforcing member is bent, the relative movement of the reinforcing member in the vehicle front-rear direction with respect to the wall portion on the second side can be limited effectively.

In the vehicle front part structure of the above aspect, the framework member includes an inner panel including the wall portion on the first side, and an outer panel including the wall portion on the second side and connected to the inner panel.

In the above aspect, the both ends of the reinforcing member in the vehicle front-rear direction are connected to the wall portion of the inner panel on the first side. Therefore, the relative movement of the reinforcing member in the vehicle front-rear direction with respect to the wall portion of the outer panel on the second side is limited by the limiting portion. In the event of a frontal collision of the vehicle, the reinforcing member and the framework member are bent outward in the vehicle width direction at a point starting from the bending portion of the reinforcing member. Therefore, it is easy to secure space for the bending of the reinforcing member and the framework member.

As described above, in the vehicle front part structure according to the present invention, the bending mode of the framework member in the event of the frontal collision can be stabilized.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a sectional view showing the configuration of a main part of a front part of a vehicle to which a vehicle front part structure according to a first comparative example is applied;
FIG. 2 is an exploded perspective view showing a front side member of the vehicle;
FIG. 3 is a partial sectional view showing the configuration of the front part of the vehicle, and is a first diagram illustrating a deformation mode of the front side member;
FIG. 4 is a second diagram illustrating the deformation mode;
FIG. 5 is a third diagram illustrating the deformation mode;
FIG. 6 is a fourth diagram illustrating the deformation mode;
FIG. 7 is a diagram showing a relationship between a deformation stroke of the front side member and a decelerative acceleration of the vehicle;
FIG. 8 is a diagram showing a relationship between the deformation stroke and a deformation load of the front side member;
FIG. 9 is a sectional view showing the configuration of a main part of a front part of a vehicle to which a vehicle front part structure according to an embodiment of the invention is applied; and
FIG. 10 is a sectional view showing the configuration of a main part of a front part of a vehicle to which a vehicle front part structure according to a second comparative example is applied.

### DETAILED DESCRIPTION OF EMBODIMENTS

### First Comparative Example

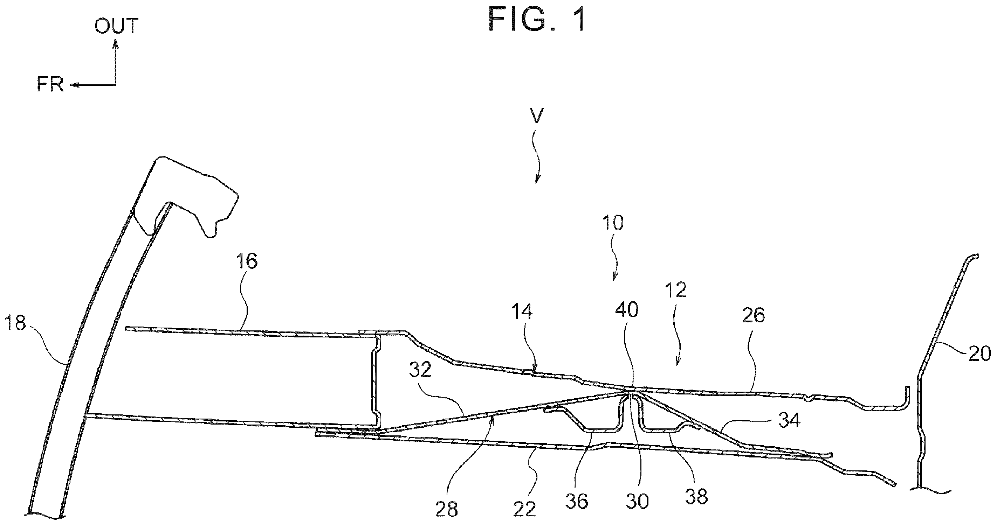

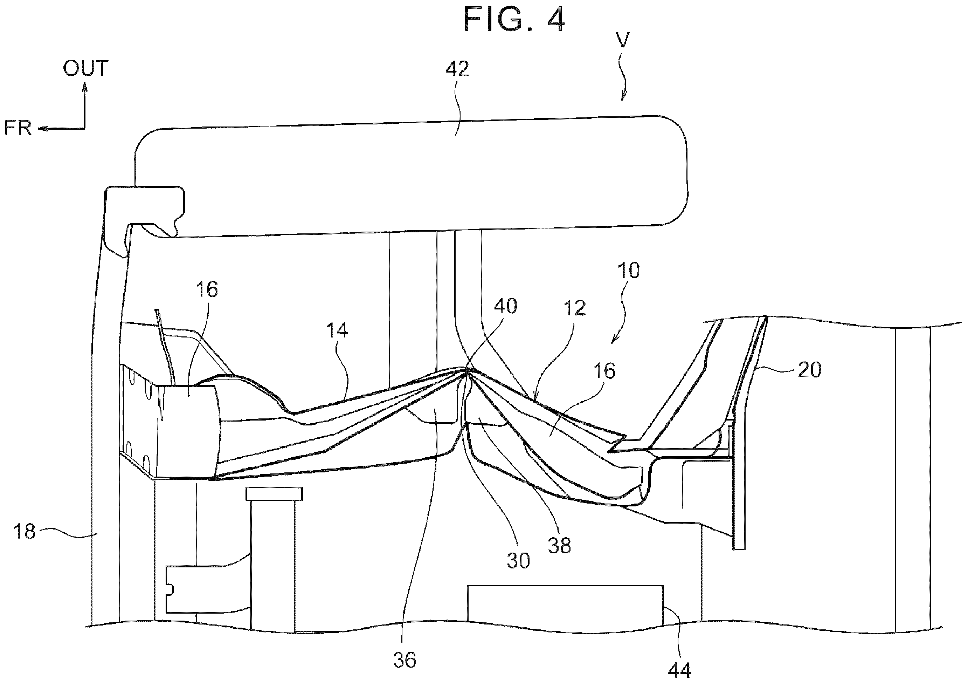

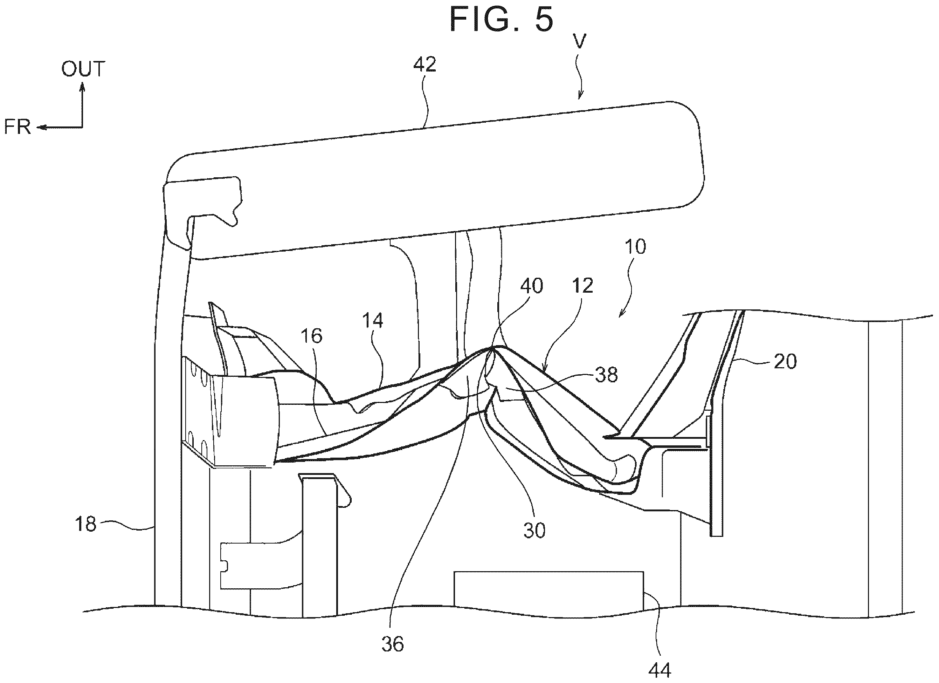

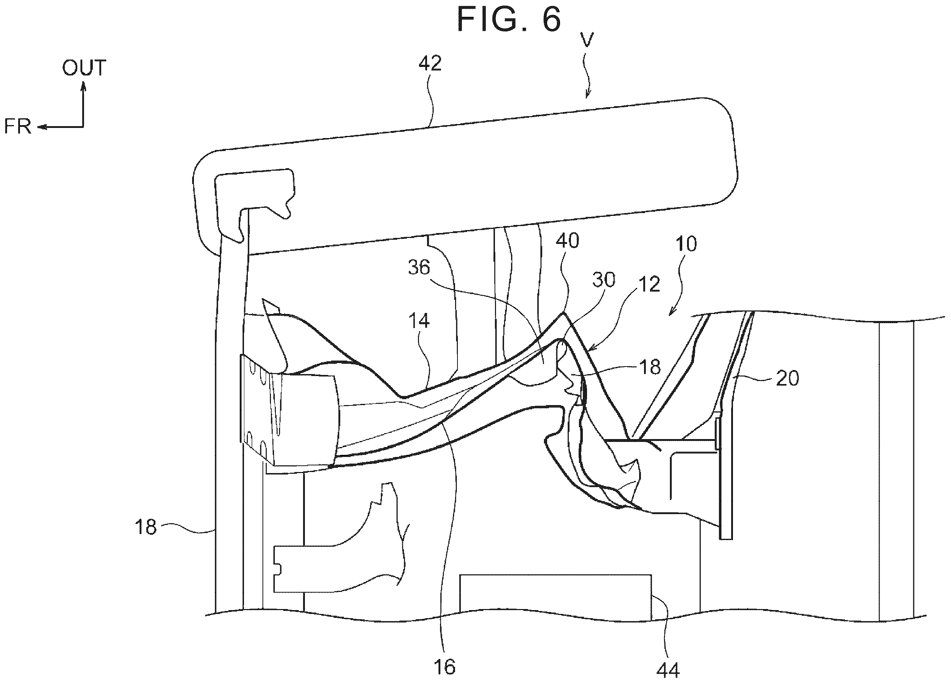

Hereinafter, a vehicle front part structure 10 according to a first comparative example will be described with reference to FIGS. 1 to 8. In the drawings, some reference signs may be omitted to make the drawings easier to see. Arrows FR, UP, OUT shown as appropriate in FIGS. 1 to 6 indicate a forward direction (travel direction), an upward direction, and an outer side in a vehicle width direction of a vehicle V to which the vehicle front part structure 10 is applied, respectively. Hereinafter, when the description is made simply using terms indicating directions, that is, forward and rearward, rightward and leftward, and upward and downward, these mean forward and rearward in the vehicle front-rear direction, rightward and leftward in the vehicle right-left direction (vehicle width direction), and upward and downward in the vehicle up-down direction unless otherwise specified.

As shown in FIG. 1, a pair of right and left front side members 12 (the left front side member 12 is not shown) is disposed at the front part of the vehicle V to which the vehicle front part structure 10 is applied. The right and left front side members 12 include front side member bodies 14 having closed sections and extending in the vehicle front-rear direction on both the right and left sides of the front part of the vehicle V. The front side member 12 includes a reinforcement 28 extending in the vehicle front-rear direction within the closed section of the front side member body 14. The front side member body 14 is an example of a "framework member" in the present disclosure, and the reinforcement 28 is an example of a "reinforcing member" in the present disclosure.

A crash box 16 is connected to the front end of each of the right and left front side members 12, and a front bumper reinforcement 18 is connected to the front end of each of the right and left crash boxes 16. A dash panel 20 is connected to the rear end of each of the right and left front side members 12.

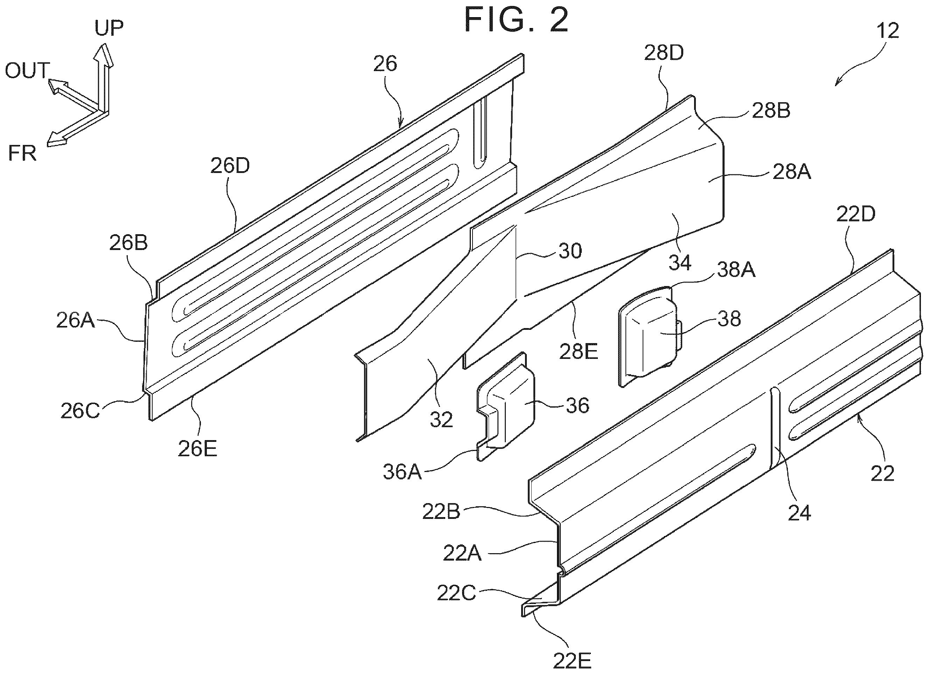

As shown in FIG. 2, the front side member body 14 includes an inner panel 22 constituting an inner part of the front side member body 14 in the vehicle width direction, and an outer panel 26 constituting an outer part of the front side member body 14 in the vehicle width direction. The inner panel 22 and the outer panel 26 are made of, for example, press-formed steel sheets, and are formed into an elongated shape with their longitudinal direction corresponding to the vehicle front-rear direction.

The inner panel 22 has a substantially hat-shaped cross section that is open outward in the vehicle width direction when viewed in the vehicle front-rear direction. The inner panel 22 includes a vertical wall portion 22A with its thickness direction corresponding to the vehicle width direction, an upper wall portion 22B extending outward in the vehicle width direction from an upper end of the vertical wall portion 22A, a lower wall portion 22C extending outward in the vehicle width direction from a lower end of the vertical wall portion 22A, an upper flange portion 22D extending upward from an outer end of the upper wall portion 22B in the vehicle width direction, and a lower flange portion 22E extending downward from an outer end of the lower wall portion 22C in the vehicle width direction. A vertical bead 24 extending in the vehicle up-down direction is formed at the middle of the vertical wall portion 22A in the vehicle front-rear direction (in this case, near the center in the vehicle front-rear direction). The vertical bead 24 recedes outward in the vehicle width direction.

The outer panel 26 has a substantially hat-shaped cross section that is open inward in the vehicle width direction when viewed in the vehicle front-rear direction. The outer panel 26 includes a vertical wall portion 26A with its thickness direction corresponding to the vehicle width direction, an upper wall portion 26B extending inward in the vehicle width direction from an upper end of the vertical wall portion 26A, a lower wall portion 26C extending inward in the vehicle width direction from a lower end of the vertical wall portion 26A, an upper flange portion 26D extending upward from an inner end of the upper wall portion 26B in the vehicle width direction, and a lower flange portion 26E extending downward from an inner end of the lower wall portion 26C in the vehicle width direction.

The "inner side in the vehicle width direction" in the present comparative example is an example of "first side in an orthogonal direction orthogonal to the vehicle front-rear direction" in the present disclosure, and the "outer side in the vehicle width direction" in the present comparative example is an example of "second side in the orthogonal direction orthogonal to the vehicle front-rear direction" in the present disclosure. The vertical wall portion 22A of the inner panel 22 (i.e., the wall portion of the front side member body 14 on the inner side in the vehicle width direction) is an example of a "wall portion on a first side" in the present disclosure, and the vertical wall portion 26A of the outer panel 26 (i.e., the wall portion of the front side member body 14 on the outer side in the vehicle width direction) is an example of a "wall portion on a second side" in the present disclosure.

The upper flange portion 22D of the inner panel 22 and the upper flange portion 26D of the outer panel 26 are connected by spot welding etc., and the lower flange portion 22E of the inner panel 22 and the lower flange portion 26E of the outer panel 26 are connected by spot welding etc. In this way, the outer panel 26 and the inner panel 22 form a substantially rectangular closed section when viewed in the vehicle front-rear direction.

The reinforcement 28 is made of, for example, a press-formed steel sheet, and is formed into an elongated shape with its longitudinal direction corresponding to the vehicle front-rear direction. The reinforcement 28 includes a vertical wall portion 28A with its thickness direction substantially corresponding to the vehicle width direction, an upper wall portion 28B extending outward in the vehicle width direction from an upper end of the vertical wall portion 28A, a lower wall portion (not shown) extending outward in the vehicle width direction from a lower end of the vertical wall portion 28A, an upper flange portion 28D extending upward from an outer end of the upper wall portion 28B in the vehicle width direction, and a lower flange portion 28E extending downward from an outer end of the lower wall portion in the vehicle width direction.

The upper flange portion 28D of the reinforcement 28 is sandwiched between the upper flange portion 22D of the inner panel 22 and the upper flange portion 26D of the outer panel 26, and is connected to the upper flange portion 22D and the upper flange portion 26D by spot welding etc. The lower flange portion 28E of the reinforcement 28 is sandwiched between the lower flange portion 22E of the inner panel 22 and the lower flange portion 26E of the outer panel 26, and is connected to the lower flange portion 22E and the lower flange portion 26E by spot welding etc.

Both ends of the vertical wall portion 28A of the reinforcement 28 in the vehicle front-rear direction are attached to the inner panel 22. The vertical wall portion 28A of the reinforcement 28 is bent to project outward in the vehicle width direction at a bending portion 30 provided at the middle between the both ends of the vertical wall portion 28A (in this case, near the center in the vehicle front-rear direction). In the vertical wall portion 28A, a portion forward of the bending portion 30 in the vehicle front-rear direction is a first inclined portion 32 that is inclined inward in the vehicle width direction as it extends to the vehicle front side, and a portion rearward of the bending portion 30 is a second inclined portion 34 that is inclined inward in the vehicle width direction as it extends to the vehicle rear side. The bending portion 30 and the vertical bead 24 formed on the vertical wall portion 22A of the inner panel 22 are positionally aligned in the vehicle front-rear direction. The disposition of the bending portion 30 is not limited to the above and may be changed as appropriate. For example, the bending portion 30 may be disposed on the front end side of the vertical wall portion 28A or on the rear end side of the vertical wall portion 28A.

The front end of the first inclined portion 32 (i.e., the front end of the vertical wall portion 28A) is laid on the front end of the vertical wall portion 22A of the inner panel 22 from the outer side in the vehicle width direction, and is connected to the front end of the vertical wall portion 22A by spot welding etc. The rear end of the second inclined portion 34 (i.e., the rear end of the vertical wall portion 28A) is laid on the rear end of the vertical wall portion 22A of the inner panel 22 from the outer side in the vehicle width direction, and is connected to the rear end of the vertical wall portion 22A by spot welding etc. Both the ends of the vertical wall portion 28A in the vehicle front-rear direction may be connected indirectly to the inner panel 22 via another plate-shaped member etc. instead of being connected directly to the inner panel 22.

A front bulkhead 36 is fixed to an inner surface of the rear end of the first inclined portion 32 in the vehicle width direction, and a rear bulkhead 38 is fixed to an inner surface of the front end of the second inclined portion 34 in the vehicle width direction. The front bulkhead 36 and the rear bulkhead 38 are made of, for example, press-formed steel sheets, and their sectional shapes when viewed in the vehicle front-rear direction and in the vehicle up-down direction are substantial hat shapes that are open outward in the vehicle width direction. The shapes of the front bulkhead 36 and the rear bulkhead 38 are not limited to those described above and may be changed as appropriate, and may be spherical or rectangular parallelepiped shapes.

The front bulkhead 36 is disposed near the bending portion 30 of the vertical wall portion 28A and forward of the bending portion 30 in the vehicle front-rear direction, and a flange portion 36A of the front bulkhead 36 is connected to the rear end of the first inclined portion 32 by spot welding etc. The rear bulkhead 38 is disposed near the bending portion 30 of the vertical wall portion 28A and rearward of the bending portion 30 in the vehicle front-rear direction, and a flange portion 38A of the rear bulkhead 38 is connected to the front end of the second inclined portion 34 by spot welding etc. The front bulkhead 36 and the rear bulkhead 38 face each other with a clearance therebetween in the vehicle front-rear direction.

The bending portion 30 of the vertical wall portion 28A is laid on the vertical wall portion 26A of the outer panel 26 from the inner side in the vehicle width direction, and is connected to the vertical wall portion 26A by welding etc. At a connecting portion 40, the bending portion 30 and the vertical wall portion 26A are connected together by one-side welding such as slit arc welding or laser screw welding (LSW) or by bolt fastening. The connecting portion 40 is an example of a "limiting portion" in the present disclosure. The connecting portion 40 limits (in this case, restricts) relative movement, in the vehicle front-rear direction, of the reinforcement 28 with respect to the vertical wall portion 26A (an example of the "wall portion on the second side" in the present disclosure) of the outer panel 26 of the front side member body 14.

In the present comparative example, the both ends of the vertical wall portion 28A of the reinforcement 28 in the vehicle front-rear direction are connected to the vertical wall portion 22A of the inner panel 22 as described above. Therefore, when the front side member 12 is assembled, the reinforcement 28 is first attached to the inner panel 22, and then the outer panel 26 is attached to the inner panel 22 and the reinforcement 28. In the case of such assembling order, it is difficult to connect the bending portion 30 of the reinforcement 28 to the vertical wall portion 26A of the outer panel 26 by spot welding. However, it is possible to assemble the front side member 12 in the above assembling order by using the one-side welding, the bolt fastening, etc. described above.

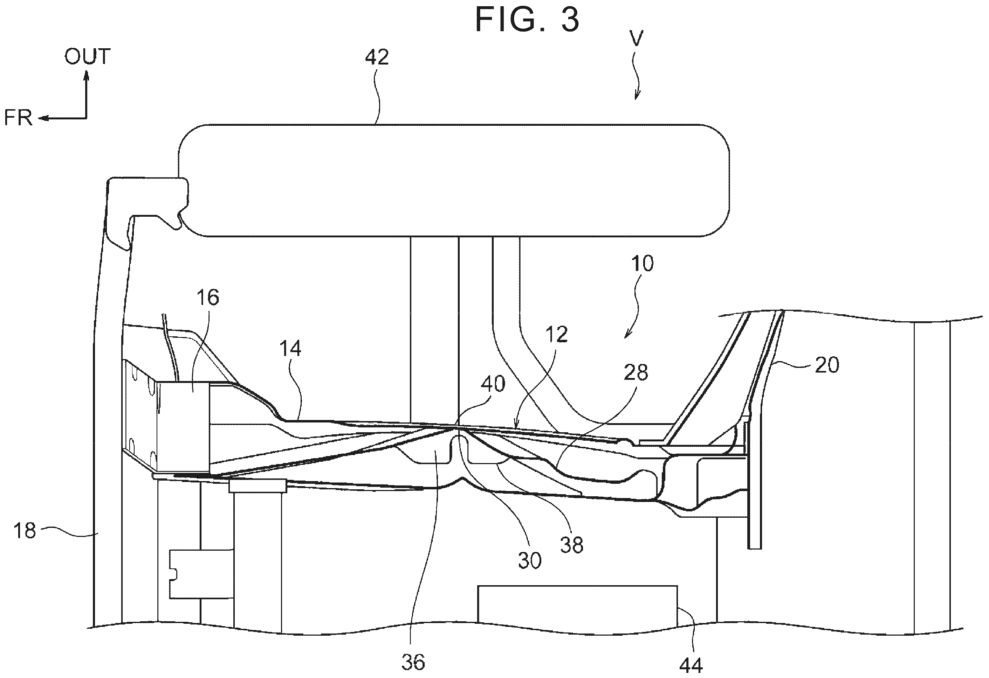

When the vehicle V to which the vehicle front part structure 10 having the above configuration is applied has a frontal collision, the crash box 16 is first axially deformed by compression in the vehicle front-rear direction as shown over time in FIGS. 3 to 6. Then, the front side member 12 is bent outward in the vehicle width direction at points starting from the bending portion 30 of the reinforcement 28 and the vertical bead 24 of the inner panel 22. At the time of bending, the front bulkhead 36 and the rear bulkhead 38 are deformed by being pressed against each other in the vehicle front-rear direction, thereby increasing a deformation load of the front side member 12. At the time of bending, the connecting portion 40 prevents or suppresses relative movement of the reinforcement 28 with respect to the vertical wall portion 26A of the outer panel 26 in the vehicle front-rear direction. In FIGS. 3 to 6, reference sign 42 denotes a front wheel of the vehicle V, and reference sign 44 denotes a power unit of the vehicle V.

Next, operations and effects of the present comparative example will be described. In the vehicle front part structure 10 having the above configuration, the reinforcement 28 extending in the vehicle front-rear direction is provided within the closed section of the front side member body 14 extending in the vehicle front-rear direction at the front part of the vehicle V. The both ends of the reinforcement 28 in the vehicle front-rear direction are connected to the vertical wall portion 22A of the inner panel 22 of the front side member body 14. The vertical wall portion 28A of the reinforcement 28 is bent to project outward in the vehicle width direction at the bending portion 30 provided between the both ends. Thus, the centroid axis of the front side member 12 is bent to project outward in the vehicle width direction in a plan view.

When the vehicle V has a frontal collision, the front side member 12 is bent outward in the vehicle width direction at a point starting from the bending portion 30. At this time, relative movement, in the vehicle front-rear direction, of the reinforcement 28 with respect to the vertical wall portion 26A of the outer panel 26 of the front side member body 14 is limited by the connecting portion 40 that connects the vertical wall portion 26A and the bending portion 30 of the reinforcement 28. Thus, the bending mode of the front side member 12 in the plan view is stabilized. Through the above limitation, the toughness (i.e., tenacity, resistance to breakage) of the front side member 12 after the bending increases, thereby improving the sustainability of the deformation load from the start of deformation of the front side member 12 to the breakage, and increasing the energy absorption amount.

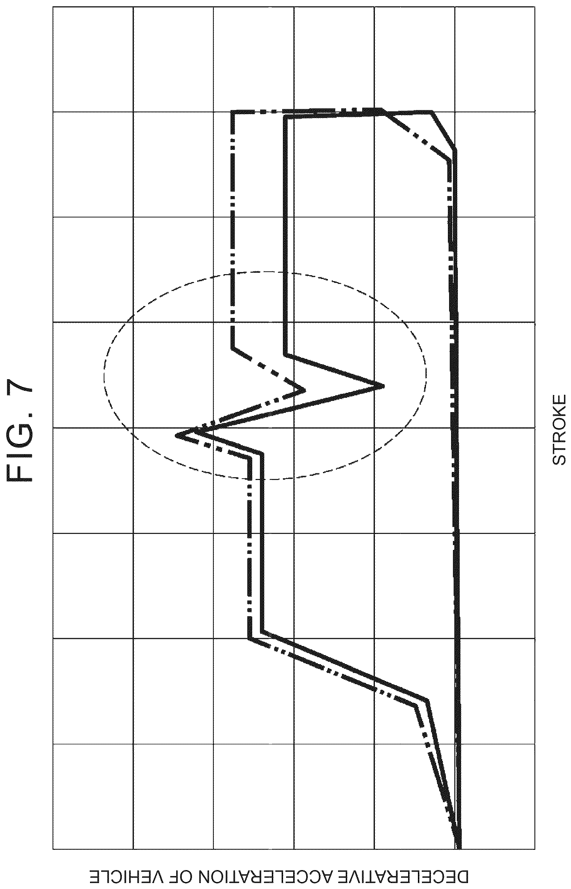

In FIG. 7, a long dashed double-short dashed line diagram shows a relationship between a deformation stroke of the front side member 12 according to the present embodiment and a decelerative acceleration of the vehicle V. In FIG. 7, a continuous line diagram shows a relationship between a deformation stroke of a front side member according to an earlier comparative example and a decelerative acceleration of a vehicle. In the earlier comparative example, the front side member does not include the connecting portion 40, but the other configuration is the same as that of the present comparative example. As shown in FIG. 7, in the present comparative example, the drop in the decelerative acceleration of the vehicle V after the bending of the front side member 12 is smaller than that in the earlier comparative example (see the region surrounded by the dashed line in FIG. 7).

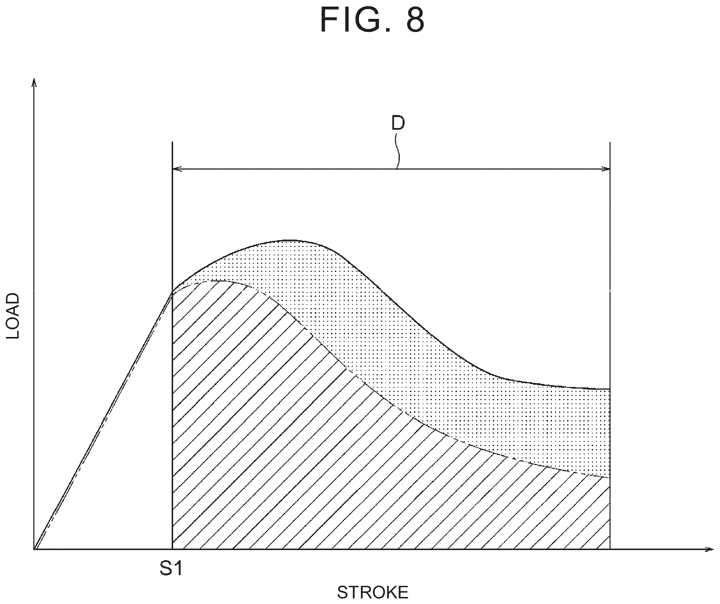

In FIG. 8, a continuous line diagram shows a relationship between the deformation stroke and a deformation load of the front side member 12 according to the present comparative example. In FIG. 8, a long dashed double-short dashed line diagram shows a relationship between the deformation stroke and a deformation load of the front side member according to the earlier comparative example. In FIG. 8, S1 represents a deformation stroke when the front side member 12 and the front side member according to the earlier comparative example each start to bend. In FIG. 8, an arrow D indicates a stretch (i.e., ductility) from the start of bending (i.e., plastic deformation) of each of the front side member 12 and the front side member according to the earlier comparative example to breakage.

In FIG. 8, the area of a region surrounded by the continuous line diagram and the horizontal axis indicates the energy absorption amount of the front side member 12, and the area of a region surrounded by the long dashed double-short dashed line diagram and the horizontal axis indicates the energy absorption amount of the front side member according to the earlier comparative example. In FIG. 8, the area of a hatched region indicates the energy absorption amount by the toughness of the front side member according to the earlier comparative example (i.e., the energy absorption amount in the ductile region), and the area of a hatched and dotted region indicates the energy absorption amount by the toughness of the front side member 12. In the present comparative example, the decrease in the deformation load after the start of plastic deformation of the front side member 12 is small. Therefore, the energy absorption amount increases by an amount corresponding to the dotted region in FIG. 8 compared to the earlier comparative example.

In the present comparative example, the vertical wall portion 26A of the outer panel 26 of the front side member body 14 and the bending portion 30 of the reinforcement 28 are connected at the connecting portion 40. Therefore, when the reinforcement 28 is bent, relative movement of the reinforcement 28 with respect to the vertical wall portion 26A in the vehicle front-rear direction can be limited effectively. As a result, the bending mode of the front side member 12 can be stabilized effectively, and the rigidity of the vehicle body under normal conditions can be increased.

In the present comparative example, the both ends of the reinforcement 28 in the vehicle front-rear direction are connected to the vertical wall portion 22A of the inner panel 22. Therefore, relative movement of the reinforcement 28 with respect to the vertical wall portion 26A of the outer panel 26 in the vehicle front-rear direction is limited. In the event of a frontal collision of the vehicle, the front side member 12 is bent outward in the vehicle width direction. Therefore, it is easy to secure space for the bending of the reinforcement 28.

Next, an embodiment of the present invention will be described. The configurations and operations that are basically the same as those of the first comparative example are denoted by the same reference signs as those of the first comparative example, and the description thereof will be omitted.

### Embodiment

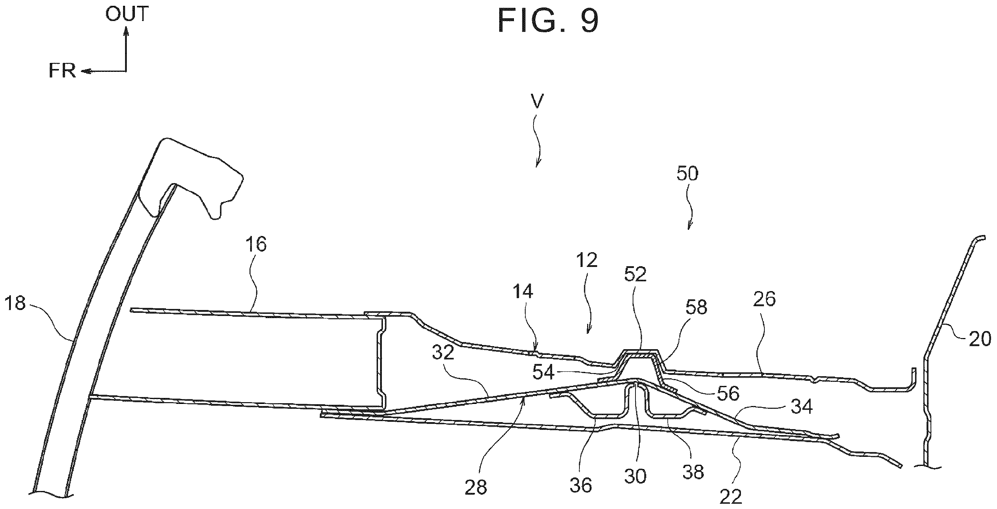

FIG. 9 is a sectional view showing the configuration of a main part of a front part of a vehicle V to which a vehicle front part structure 50 according to a second embodiment of the present invention is applied. In the vehicle front part structure 50, the front side member 12 includes, instead of the connecting portion 40 in the first comparative example, a first engagement portion 52 provided on the vertical wall portion 26A of the outer panel 26 of the front side member body 14, and a second engagement portion 56 provided on the vertical wall portion 28A of the reinforcement 28.

The first engagement portion 52 is formed by part of the vertical wall portion 26A, and the second engagement portion 56 is made of, for example, a press-formed steel sheet. The first engagement portion 52 faces the bending portion 30 of the vertical wall portion 28A in the vehicle width direction. In the first engagement portion 52, the sectional shapes when viewed in the vehicle front-rear direction and in the vehicle up-down direction are, for example, substantial C-shapes (substantial U-shapes) that are open inward in the vehicle width direction. The first engagement portion 52 may be manufactured separately from the outer panel 26 and connected to the vertical wall portion 26A by welding etc. In this case, the vertical wall portion 26A has an opening at a location where it faces the first engagement portion 52. The first engagement portion 52 defines a recess 54 at a location where it faces the bending portion 30. The recess 54 recedes outward in the vehicle width direction.

The second engagement portion 56 is disposed on the outer side of the vertical wall portion 28A in the vehicle width direction to face the bending portion 30 of the vertical wall portion 28A in the vehicle width direction. In the second engagement portion 56, the sectional shapes when viewed in the vehicle front-rear direction and in the vehicle up-down direction are, for example, substantial hat shapes that are open inward in the vehicle width direction. In the second engagement portion 56, a flange portion (reference sign is omitted) on the inner side in the vehicle width direction is connected to the vertical wall portion 28A by spot welding etc. The second engagement portion 56 defines a projection 58 at a location where it faces the recess 54. The projection 58 projects outward in the vehicle width direction. The dimension of the recess 54 in the vehicle front-rear direction is set larger than the dimension of the projection 58 in the vehicle front-rear direction, and part of the projection 58 is inserted into the recess 54. The recess 54 and the projection 58 are an example of the "limiting portion" in the present invention, and have the function of limiting relative movement of the reinforcement 28 with respect to the vertical wall portion 26A of the outer panel 26 in the vehicle front-rear direction to a predetermined range. The recess 54 and the projection 58 may be connected by one-side welding, bolt fastening, etc. In the present embodiment, the configurations other than the above are the same as those in the first comparative example.

In the present embodiment, the front side member body 14 includes the recess 54 that recedes outward in the vehicle width direction at the location on the vertical wall portion 26A of the outer panel 26 where the recess 54 faces the bending portion 30 of the reinforcement 28. Therefore, when the reinforcement 28 is bent outward in the vehicle width direction at a point starting from the bending portion 30, the recess 54 engages with the peripheral portion of the bending portion 30 of the reinforcement 28 (in this case, the projection 58). Thus, it is possible to limit relative movement of the reinforcement 28 with respect to the vertical wall portion 26A in the vehicle front-rear direction. Accordingly, in the present embodiment, the bending mode of the front side member 12 can be stabilized and the energy absorption amount can be increased basically similarly to the first embodiment.

In the present embodiment, the projection 58 that projects outward in the vehicle width direction is provided at the location on the reinforcement 28 where the projection 58 faces the recess 54. Therefore, when the reinforcement 28 is bent, the projection 58 and the recess 54 engage with each other (i.e., the projection 58 is caught in the recess 54), thereby effectively limiting (suppressing) relative movement of the reinforcement 28 with respect to the vertical wall portion 26A in the vehicle front-rear direction.

In the present embodiment, the dimension of the recess 54 in the vehicle front-rear direction is set larger than the dimension of the projection 58 in the vehicle front-rear direction. Therefore, when the projection 58 is inserted into the recess 54 under normal conditions, dimensional variations of the members in the vehicle front-rear direction can be absorbed easily.

In the embodiment, the projection 58 is provided on the reinforcement 28, but the present invention is not limited to this, and the projection 58 may be omitted. In this case, when the reinforcement 28 is bent, the peripheral portion of the bending portion 30 of the vertical wall portion 28A of the reinforcement 28 enters the recess 54 and engages with the recess 54. In this case, the bending portion 30 and the recess 54 may be connected by one-side welding, bolt fastening, etc.

### Second Comparative Example

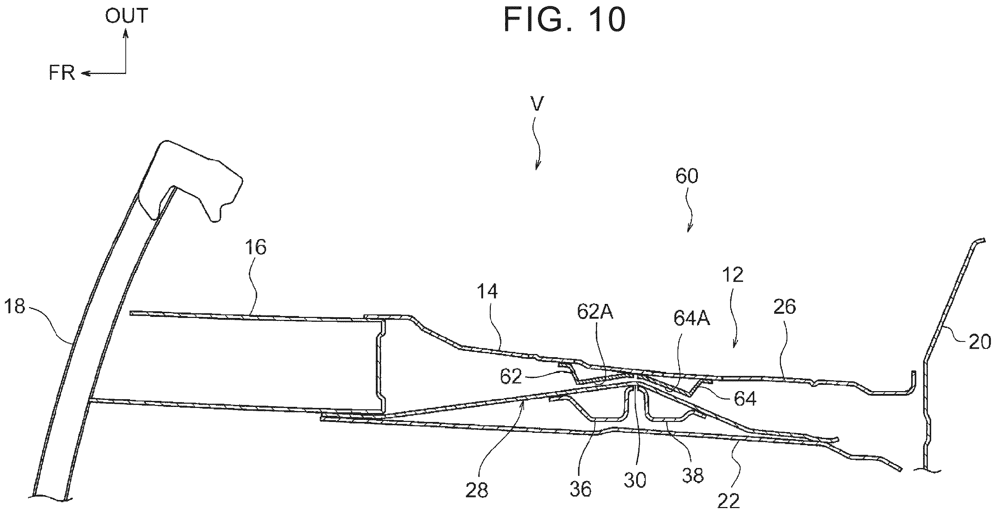

FIG. 10 is a sectional view showing the configuration of a main part of a front part of a vehicle V to which a vehicle front part structure 60 according to a second comparative example is applied. In the vehicle front part structure 60, the front side member 12 includes, instead of the connecting portion 40 in the first comparative example, a first limiting portion 62 and a second limiting portion 64 fixed to the vertical wall portion 26A of the outer panel 26 of the front side member body 14. The first limiting portion 62 and the second limiting portion 64 are an example of the "limiting portion" in the present disclosure, and have the function of limiting relative movement of the reinforcement 28 with respect to the vertical wall portion 26A of the outer panel 26 in the vehicle front-rear direction to the predetermined range.

The first limiting portion 62 and the second limiting portion 64 are made of, for example, press-formed steel sheets, and are disposed on the inner side of the vertical wall portion 26A of the outer panel 26 in the vehicle width direction. The first limiting portion 62 and the second limiting portion 64 may be integrated with the outer panel 26 (i.e., part of the vertical wall portion 26A may be the first limiting portion 62 and the second limiting portion 64). The first limiting portion 62 is disposed forward of the bending portion 30 of the reinforcement 28 in the vehicle front-rear direction to project inward in the vehicle width direction. The second limiting portion 64 is disposed rearward of the bending portion 30 in the vehicle front-rear direction to project inward in the vehicle width direction.

In the first limiting portion 62, the sectional shape when viewed in the vehicle up-down direction is a substantially triangular shape, and a flange portion (reference sign is omitted) on the outer side in the vehicle width direction is connected to the vertical wall portion 26A by spot welding etc. The first limiting portion 62 includes a first inclined surface 62A that is inclined outward in the vehicle width direction as it extends to the vehicle rear side. In the second limiting portion 64, the sectional shape when viewed in the vehicle up-down direction is a substantially triangular shape, and a flange portion (reference sign is omitted) on the outer side in the vehicle width direction is connected to the vertical wall portion 26A by spot welding etc. The second limiting portion 64 includes a second inclined surface 64A that is inclined outward in the vehicle width direction as it extends to the vehicle front side.

The first inclined surface 62A is disposed in contact with the first inclined portion 32 (i.e., a portion forward of the bending portion 30 in the vehicle front-rear direction) of the vertical wall portion 28A of the reinforcement 28 from the vehicle front side, or, the first inclined surface 62A is disposed in proximity to the first inclined portion 32 to face the first inclined portion 32. The second inclined surface 64A is in contact with the second inclined portion 34 (i.e., a portion rearward of the bending portion 30 in the vehicle front-rear direction) of the vertical wall portion 28A from the vehicle rear side, or, the second inclined surface 64A is disposed in proximity to the second inclined portion 34 to face the second inclined portion 34. In the present comparative example, the configurations other than the above are the same as those in the first comparative example.

In the present comparative example, the first limiting portion 62 and the second limiting portion 64 are provided on the vertical wall portion 26A of the outer panel 26 of the front side member body 14. The first limiting portion 62 projects inward in the vehicle width direction at a location forward of the bending portion 30 of the reinforcement 28 in the vehicle front-rear direction, and the second limiting portion 64 projects inward in the vehicle width direction at a location rearward of the bending portion 30 in the vehicle front-rear direction. Therefore, when the reinforcement 28 is bent outward in the vehicle width direction at a point starting from the bending portion 30, the peripheral portion of the bending portion 30 of the reinforcement 28 engages (comes into contact) with the first limiting portion 62 and the second limiting portion 64, thereby limiting relative movement of the reinforcement 28 with respect to the vertical wall portion 26A in the vehicle front-rear direction. Accordingly, in the present comparative example, the bending mode of the front side member 12 can be stabilized and the energy absorption amount can be increased basically similarly to the first comparative example.

In the present comparative example, the first inclined surface 62A of the first limiting portion 62 is inclined outward in the vehicle width direction as it extends to the vehicle rear side, and the second inclined surface 64A of the second limiting portion 64 is inclined outward in the vehicle width direction as it extends to the vehicle front side. Therefore, when the reinforcement 28 is bent at a point starting from the bending portion 30, the peripheral portion of the bending portion 30 of the reinforcement 28 slides against the first inclined surface 62A and the second inclined surface 64A, thereby guiding the entry of the peripheral portion of the bending portion 30 into the space between the first limiting portion 62 and the second limiting portion 64.

In the present embodiment, the first limiting portion 62 is in contact with the first inclined portion 32 of the reinforcement 28 from the vehicle front side or is in proximity to the first inclined portion 32 to face the first inclined portion 32, and the second limiting portion 64 is in contact with the second inclined portion 34 of the reinforcement 28 from the vehicle rear side or is in proximity to the second inclined portion 34 to face the second inclined portion 34. Therefore, when the reinforcement 28 is bent at a point starting from the bending portion 30, relative movement of the reinforcement 28 with respect to the vertical wall portion 26A of the outer panel 26 of the front side member body 14 in the vehicle front-rear direction is limited (suppressed) at an early stage. As a result, the bending mode of the front side member 12 can be stabilized at an early stage.

In the above embodiment, the "inner side in the vehicle width direction" is "first side in the orthogonal direction orthogonal to the vehicle front-rear direction" in the present invention, and the "outer side in the vehicle width direction" is "second side in the orthogonal direction orthogonal to the vehicle front-rear direction" in the present invention, but the present invention is not limited to this. For example, the "vehicle upper side" may be "first side in the orthogonal direction orthogonal to the vehicle front-rear direction" in the present invention, and the "vehicle lower side" may be "second side in the orthogonal direction orthogonal to the vehicle front-rear direction" in the present invention.

In addition, the present invention can be implemented with various modifications without departing from the scope of the claims, which is defined by the appended claims.

## Claims

1. A vehicle front part structure (10) comprising:
a framework member (14) having a closed section, extending in a vehicle front-rear direction at a front part of a vehicle (V), and including an inner panel (22) including a wall portion (22A) on a first side, and an outer panel (26) including a wall portion (26A) on a second side and connected to the inner panel (22);
a reinforcing member (28) extending in the vehicle front-rear direction within the closed section of the framework member (14), the reinforcing member (28) including two ends in the vehicle front-rear direction that are attached to the wall portion (22A) of the framework member (14) on the first side in an orthogonal direction orthogonal to the vehicle front-rear direction, the reinforcing member (28) being bent to project to the second side in the orthogonal direction at a bending portion (30) provided between the two ends; and
a limiting portion (54, 58) configured to limit relative movement of the reinforcing member (28) in the vehicle front-rear direction and including a recess (54);
the vehicle front part structure being **characterized in that** the limiting portion (54,58) is configured to limit relative movement of the reinforcing member (28) in the vehicle front-rear direction with respect to a wall portion (26A) of the framework member (14) on the second side, and the recess (54) is provided at a location on the wall portion (26A) on the second side where the recess (54) faces the bending portion (30), and that recedes to the second side.

2. The vehicle front part structure (10) according to claim 1, wherein the reinforcing member (28) includes a projection (58) that is provided at a location where the projection (58) faces the recess (54) in the orthogonal direction, and that projects to the second side.

3. The vehicle front part structure (10) according to claim 2, wherein a dimension of the recess (54) in the vehicle front-rear direction is set larger than a dimension of the projection (58) in the vehicle front-rear direction.

4. The vehicle front part structure (10) according to any one of claims 1 to 3, wherein the limiting portion (54, 58) includes a connecting portion (54, 58) that connects the wall portion (26A) on the second side and the bending portion (30).

## Patentansprüche

1. Fahrzeugvorderteilstruktur (10), umfassend:
ein Rahmenelement (14), das ein geschlossenes Teilstück aufweist, das sich in einer Fahrzeugrichtung von vorne nach hinten an einem Vorderteil eines Fahrzeugs (V) erstreckt, und das eine Innenplatte (22), die einen Wandabschnitt (22A) auf einer ersten Seite umfasst, und eine Außenplatte (26), die einen Wandabschnitt (26A) auf einer zweiten Seite umfasst und mit der Innenplatte (22) verbunden ist, umfasst;
ein Verstärkungselement (28), das sich in der Fahrzeugrichtung von vorne nach hinten innerhalb des geschlossenen Teilstücks des Rahmenelements (14) erstreckt, wobei das Verstärkungselement (28) zwei Enden in der Fahrzeugrichtung von vorne nach hinten umfasst, die an dem Wandabschnitt (22A) des Rahmenelements (14) auf der ersten Seite in einer orthogonalen Richtung, die zu der Fahrzeugrichtung von vorne nach hinten orthogonal ist, angebracht sind, wobei das Verstärkungselement (28) gekrümmt ist, um zu der zweiten Seite hin in der orthogonalen Richtung an einem Krümmungsabschnitt (30), der zwischen den beiden Enden bereitgestellt wird, vorzustehen; und
einen Begrenzungsabschnitt (54, 58), der dazu konfiguriert ist, eine relative Bewegung des Verstärkungselements (28) in der Fahrzeugrichtung von vorne nach hinten zu begrenzen, und der eine Vertiefung (54) umfasst;
wobei die Fahrzeugvorderteilstruktur **dadurch gekennzeichnet, dass** der Begrenzungsabschnitt (54, 58) dazu konfiguriert ist, eine relative Bewegung des Verstärkungselements (28) in der Fahrzeugrichtung von vorne nach hinten im Verhältnis zu einem Wandabschnitt (26A) des Rahmenelements (14) auf der zweiten Seite zu begrenzen, und die Vertiefung (54) an einer Stelle auf dem Wandabschnitt (26A) auf der zweiten Seite bereitgestellt wird, an der die Vertiefung (54) dem Krümmungsabschnitt (30) gegenübersteht, und die sich auf die zweite Seite hin vertieft.

2. Fahrzeugvorderteilstruktur (10) nach Anspruch 1, wobei das Verstärkungselement (28) einen Vorsprung (58) umfasst, der an einer Stelle bereitgestellt wird, an welcher der Vorsprung (58) der Vertiefung (54) in der orthogonalen Richtung gegenübersteht, und der zu der zweiten Seite hin vorsteht.

3. Fahrzeugvorderteilstruktur (10) nach Anspruch 2, wobei eine Dimension der Vertiefung (54) in der Fahrzeugrichtung von vorne nach hinten größer eingestellt ist als eine Dimension des Vorsprungs (58) in der Fahrzeugrichtung von vorne nach hinten.

4. Fahrzeugvorderteilstruktur (10) nach einem der Ansprüche 1 bis 3, wobei der Begrenzungsabschnitt (54, 58) einen Verbindungsabschnitt (54, 58) umfasst, der den Wandabschnitt (26A) auf der zweiten Seite und den Krümmungsabschnitt (30) verbindet.

## Revendications

1. Structure de partie avant de véhicule (10) comprenant :
un élément de cadre (14) ayant une section fermée, s'étendant dans une direction avant - arrière de véhicule au niveau d'une partie avant d'un véhicule (V) et comprenant un panneau interne (22) comprenant une partie de paroi (22A) sur un premier côté, et un panneau externe (26) comprenant une partie de paroi (26A) sur un deuxième côté et raccordé au panneau interne (22) ;
un élément de renforcement (28) s'étendant dans la direction avant - arrière de véhicule dans la section fermée de l'élément de cadre (14), l'élément de renforcement (28) comprenant deux extrémités dans la direction avant - arrière de véhicule qui sont fixées à la partie de paroi (22A) de l'élément de cadre (14) sur le premier côté dans une direction orthogonale, orthogonale à la direction avant - arrière de véhicule, l'élément de renforcement (28) étant coudée pour faire saillie vers le deuxième côté dans la direction orthogonale au niveau d'une partie de coude (30) prévue entre les deux extrémités ; et
une partie de limitation (54, 58) configurée pour limiter le mouvement relatif de l'élément de renforcement (28) dans la direction avant - arrière de véhicule et comprenant un évidement (54) ;
la structure de partie avant de véhicule étant **caractérisée en ce que** la partie de limitation (54, 58) est configurée pour limiter le mouvement relatif de l'élément de renforcement (28) dans la direction avant - arrière de véhicule par rapport à une partie de paroi (26A) de l'élément de cadre (14) sur le deuxième côté, et l'évidement (54) est prévu au niveau d'un emplacement sur la partie de paroi (26A) sur le deuxième côté où l'évidement (54) fait face à la partie de coude (30) et qui recule vers le deuxième côté.

2. Structure de partie avant de véhicule (10) selon la revendication 1, dans laquelle l'élément de renforcement (28) comprend une saillie (58) qui est prévue à un emplacement où la saillie (58) fait face à l'évidement (54) dans la direction orthogonale, et qui fait saillie vers le deuxième côté.

3. Structure de partie avant de véhicule (10) selon la revendication 2, dans laquelle une dimension de l'évidement (54) dans la direction avant - arrière de véhicule est supérieure à une dimension de la saillie (58) dans la direction avant - arrière de véhicule.

4. Structure de partie avant de véhicule (10) selon l'une quelconque des revendications 1 à 3, dans laquelle la partie de limitation (54, 58) comprend une partie de raccordement (54, 58) qui raccorde la partie de paroi (26A) sur le deuxième côté et la partie de coude (30).
